# EUROPEAN PATENT SPECIFICATION

(11) **EP 2 507 104 B1**
(45) Date of publication and mention of the grant of the patent: **08.04.2015**
(21) Application number: 09799246.5
(22) Date of filing: 30.11.2009
(51) Int. Cl.: B60W 30/14, B60W 10/18, B60W 10/06, B60W 10/11

(54) **METHOD AND SYSTEM FOR CONTROLLING A VEHICLE CRUISE CONTROL**
VERFAHREN UND SYSTEM FÜR DIE GESCHWINDIGKEITSREGELUNG EINES FAHRZEUGS
PROCÉDÉ ET SYSTÉME POUR LE CONTROL DE LA VITESSE DU VÉHICULE

(43) Date of publication of application: 10.10.2012
(73) Proprietor: Volvo Lastvagnar AB, 405 08 Göteborg (SE)
(72) Inventor: BJERNETUN, Johan, S-417 65 Göteborg (SE); ERIKSSON, Anders, S-42349 Torslanda (SE)
(74) Representative: Jönrup, Emil
(86) International application number: PCT/EP2009/008507
(87) International publication number: WO 2011/063823

(56) References cited:
- WO-A1-2008/094112
- WO-A1-2009/126554

## Description

### TECHNICAL FIELD OF THE INVENTION

The present invention relates to a method for controlling a cruise control in a vehicle, in accordance with the preamble of the accompanying claim 1. The invention also relates to a vehicle cruise control system intended for such method for controlling said cruise control, in accordance with the preamble of the accompanying claim 3.

The present invention also relates to a computer program, computer program product and a storage medium for a computer all to be used with a computer for executing said method.

### BACKGROUND OF THE INVENTION

Motor vehicles, such as cars, lorries, towing vehicles and buses, are often provided with a so-called cruise control system, also denominated speed control system, for automatically controlling the vehicle speed. Such a cruise control system comprises means, such as a speed sensor, for monitoring the actual vehicle speed. The cruise control system compares the actual vehicle speed with a set target speed. The target speed may for instance be entered into the cruise control system as the prevailing actual vehicle speed when a set switch is actuated by the driver. The cruise control system generates an error signal by comparing the actual vehicle speed with the target speed. The error signal is then for instance used to control an actuator coupled to the fuel pump or to the vehicle throttle in order to change the engine speed until the error signal is substantially zero, i.e. until the actual vehicle speed is equal to the target speed.

EP 1439976 and US6990401 disclose two examples of prior art where the cruise control system is a predictive cruise control system utilizing information about current vehicle position and upcoming road topography, that is for example gradients or elevation values for the coming road, in order to control throttle opening in such a way as to increase fuel effciency.

A cruise control system can also comprise a brake cruise control, which means that the cruise control system automatically brakes the vehicle, with for example auxiliary brakes and/or service brakes, when a set vehicle overspeed has been exceeded. A problem with such a system can be that the system starts to brake fully some km/h above said set vehicle overspeed. The delay is due to comfort reasons and mechanical delays. This leads to that the driver typically decreases the set vehicle overspeed in order not to risk to high overspeeds, especially when the vehicle is heavily loaded and/ or the downhill is steep. This has a negative effect on fuel consumption, due to that a decreased set vehicle overspeed results in a decreased use of the kinetic energy of said vehicle. Alternatively the driver manually brakes the vehicle, which leads to inactivation of the cruise control.

A solution that to some extent milders the effects of said problem is disclosed in JP6135260, where a control unit registers vehicle gross weight and road inclination in order to adjust the braking power in the brake cruise control. Generic WO2008094112 and WO2009126554 disclose further relevant prior art.

The object of the present invention is to further develop such a cruise control system where information about current vehicle condition is used for a better control of a brake cruise control.

### SUMMARY OF THE INVENTION

Thus, the primary object of the present invention is to present an improved method for cruise control which can avoid too high overspeeds when brake cruise control is initiated. This is achieved by a method as discussed in the introduction, the characteristics of which are defined by claim 1. The object is also achieved by a system as discussed in the introduction, the characteristics of which are defined by claim 3.

The method according to the invention is a method for controlling a vehicle cruise control comprising the steps of:
- driving said vehicle with said cruise control active and set to maintain a vehicle set target speed;
- registering a first parameter being vehicle gross weight and a second parameter being current road inclination;
- based on said registered first and second parameters adjusting a set vehicle overspeed for a brake cruise control in said cruise control to a new value ;
- if said first parameter is registered high and/or said second parameter is registered as a steep downhill then adjusting by decreasing said set vehicle overspeed in a corresponding degree or;
- if said first parameter is registered low and/or said second parameter is registered as a downhill with low inclination then adjusting by increasing said set vehicle overspeed in a corresponding degree.

According to another embodiment of the invention said method further comprises the steps of:
- registering a third parameter being coming road topography for a predetermined road distance ahead of current vehicle position;
- based on said registered first to third parameters adjusting said set vehicle overspeed.

The invention also relates to a cruise control system that comprises (includes, but is not necessarily limited to) a control unit arranged for performing said method steps.

Further advantageous embodiments of the invention emerge from the dependent patent claims following patent claim 1.

### BRIEF DESCRIPTION OF THE DRAWINGS

The present invention will be described in greater detail below with reference to the accompanying drawings which, for the purpose of exemplification, shows further preferred embodiments of the invention and also the technical background, and in which:
Figure 1 diagrammatically shows a vehicle speed diagram and corresponding examples of driving conditions, and where said speed diagram discloses brake cruise control in a cruise control according to an embodiment of the invention.
Figure 2 discloses an embodiment of the invention applied in a computer environment.

### DESCRIPTION OF THE INVENTION

A cruise control system for automatically controlling the vehicle speed can be arranged in a vehicle according to known art. Said cruise control system comprises a control unit for continually processing input signals and deliver output signals to, for example a propulsion unit control for controlling a propulsion unit and if installed also a brake control unit for controlling braking devices in said vehicle in order to maintain a set vehicle speed. Said braking devices can be a service brake and/or auxiliary brake and/or an electric motor/generator (if for example the vehicle is equipped with a hybrid propulsion system). Said vehicle cruise control system further comprises at least a driver input interface. Said control unit is arranged to perform steps of below described inventive functions with the use of information about current vehicle condition.

A cruise control in said vehicle is set to maintain v_{cc set target speed}. This can be set by the driver. Thus, said control unit in said cruise control system is arranged to maintain said V_{cc set target speed}. A maximum vehicle overspeed v_{bcc} can also be set by the driver in order for the control unit to initiate braking of said vehicle if vehicle speed approaches said v_{bcc}. This functionality is known as such and is also called brake cruise control. Said maximum vehicle overspeed v_{bcc} for said vehicle cruise control can be set to be at least equal to or higher than said vehicle set target speed. In below described inventive embodiments v_{bcc} is set higher than v_{cc set target speed}.

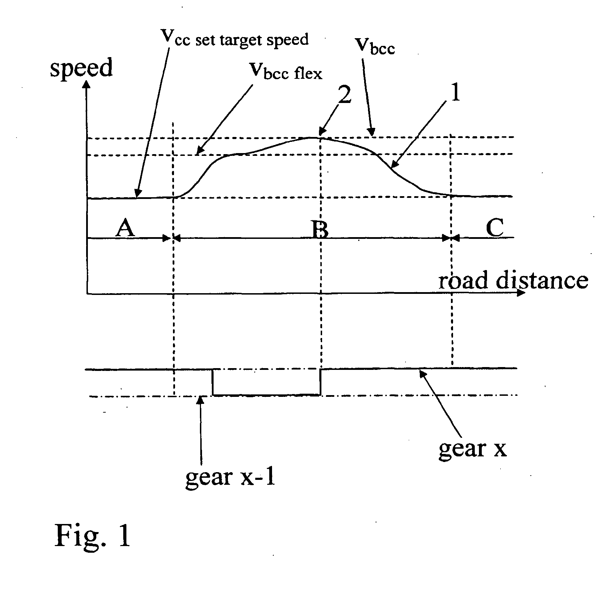

Referring to figure 1 and according to an embodiment of the invention said control unit in said cruise control system is programmed to drive said vehicle with said cruise control active and set to maintain a vehicle set target speed v_{cc set target speed}, and to perform the following steps:
- driving said vehicle with said cruise control active and set to maintain a vehicle set target speed;
- registering a first parameter being vehicle gross weight and a second parameter being current road inclination;
- based on said registered first and second parameters adjusting a set vehicle overspeed v_{bcc} for a brake cruise control in said cruise control to a new value.

As can be seen in figure 1 different vehicle speed levels are depicted as three dotted horisontal lines in the speed/road distance diagram. v_{cc set target speed} and v_{bcc} are set by the driver. A, B and C disclose examples of different parts of a road distance with typical examples of different vehicle travelling conditions during said road distance. Vehicle speed curve 1 discloses how the actual vehicle speed varies/is controlled during said road distance. During the exemplified distance part A the vehicle travelling condition corresponds to a relatively horizontal road and as the vehicle speed curve 1 discloses the cruise control is during this part able to maintain v_{c set target speed}. During the initial part of B the vehicle travelling condition corresponds to a steep downhill road and as shown by vehicle speed curve 1 the vehicle speed increases. According to the invention said control unit is programmed during this initial part of B to register said first parameter and said second parameter, and based on said registered parameters said control unit is programmed to adjust the set v_{bcc} to a new value, disclosed in figure 1 as vehicle speed level v_{bcc flex}. The benefit is that a vehicle speed increase resulting in a vehicle speed that exceeds v_{bcc} due to delays in the cruise control and braking devices can be avoided. Said second parameter is here said to be current road inclination. This road inclination can of course also be a part in for example measured travelling resistance, which usually comprise air resistance, rolling reistance and said road inclination.

According to a further embodiment of the invention said control unit is programmed to further perform the steps:
- if said first parameter is registered high and/or said second parameter is registered as a steep downhill then adjusting by decreasing said set vehicle overspeed in a corresponding degree or;
- if said first parameter is registered low and/or said second parameter is registered as a downhill with low inclination then adjusting by increasing said set vehicle overspeed in a corresponding degree.

Figure 1 discloses an example where the vehicle in the initial part of B enters a steep downhill. Thus, since the control unit registers a steep downhill the v_{bcc} is decreased to v_{bcc flex}. The calculated and selected degree of decreased v_{bcc} is mainly dependent of the following variables:
- vehicle gross weight;
- how steep the downhill is;
- how powerful the braking devices of the vehicle are;
- expected mechanical delays in the braking devices and;
- comfort settings in the cruise control in order to avoid sudden harsh vehicle speed changes.

In the corresponding way and as mentioned said control unit can be programmed to increase v_{bcc} when such vehicle travelling conditions are prevailing which allows such an increase.

Referring back to figure 1 the vehicle speed continues to increase and soon reaches v_{bcc flex} where the braking devices are activated in order to decrease acceleration and level out on v_{bcc flex}. In the shown example said braking devices are activated slightly before the vehicle reaches v_{bcc flex}. In this way overshooting of v_{bcc flex} is avoided.

During midsection of road distance part B and up to a vertical line 2 the vehicle continues to travel in said downhill road. The downhill road levels away when approaching said line 2. As can be seen in the shown example said control unit can be programmed to allow the vehicle speed to continue to increase up to said v_{bcc}. This is done with said braking devices still activated but controlled in order to allow said vehicle speed increasement up to v_{bcc}. In this way v_{bcc} can be reached without risking to exceed v_{bcc}.

After line 2 and the second part of B more horisontal road conditions are prevailing and the braking effect from the braking devices can be fased out and eventually the braking devices can be inactivated. This can happen somewhere after line 2. The travelling resistance of the vehicle will continue to decrease vehicle speed and the cruise control unit will level away the vehicle speed at v_{cc set target speed} as disclosed during part C of the road distance. Of course the second part of part B and C can also represent a downhill road, but with less inclination compared to the first half of part B, and where the braking effect of the braking devices will be enough in order to decrease vehicle speed to v_{cc set target speed} if appropiate.

According to another embodiment of the invention said vehicle cruise control system can further comprise a vehicle position identifying device and road topography identifying device, which as such are according to known art (see for example EP1439976 and US6990401). From said vehicle position identifying device and said road topography identifying device the control unit can register coming road topography, that is, how the road inclination varies during a predetermined distance ahead of current vehicle position. Examples of road topography identifying device are route identifying devices and electronic map devices where information about current vehicle position can be collected from for example the known GPS (Global Positioning System). According to the invention said control unit can further be programmed to perform the steps of:
- registering a third parameter being coming road topography for a predetermined road distance ahead of current vehicle position;
- based on said registered first to third parameters adjusting said set vehicle overspeed.

Thus, besides the above mentioned variables also coming road topography can be considered when calculating a v_{bcc flex}. This embodiment can result in an even better adjustment of v_{bcc} since coming road inclination is considered.

A vehicle, such as above mentioned, can comprise a propulsion unit drivingly connected to driven wheels of said vehicle via a transmission. A step geared transmission can comprise an input shaft, an intermediate shaft, which has at least one toothed gear meshing with a toothed gear on the input shaft, and main shaft with
toothed gears, which mesh with toothed gears on the intermediate shaft. The main shaft is then further connected to an output shaft coupled to the driving wheels by way of a propeller shaft, for example. Each pair of toothed gears has a different gear ratio from another pair of gears in the gearbox. Different transmission ratios are obtained in that different pairs of gears transmit the torque from the propulsion unit to the driven wheels. Between two interacting and rotating toothed gears in such a transmission friction losses occur between the teeth of each of the toothed gears which are in engagement.

In another embodiment of the invention such an transmission can be used in order to contribute to the total braking effect. As disclosed below the speed/road distance diagram in figure 1 a gear x can be engaged during distance part A and initially in part
B. Said control unit can be programmed to upon registration of said steep downhill road and vehicle gross weight to initiate and perform a downshift to gearx-1. At line 2 where the downslope levels away the gear x-1 can be disengaged and gear x can be engaged again. In an alternative procedure and if appropiate skip shifts can be performed.

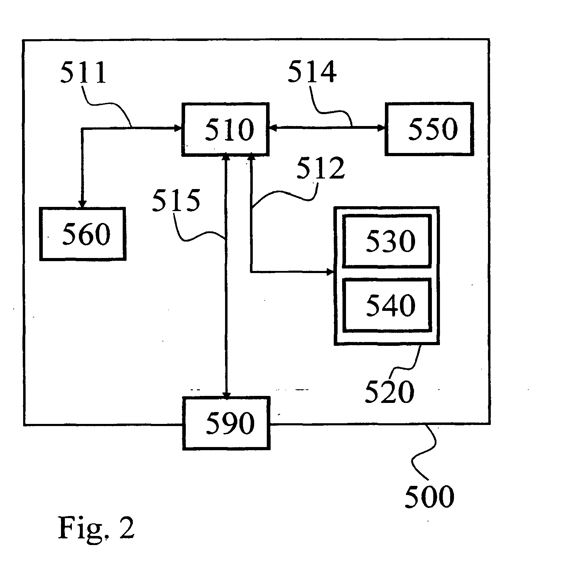

Figure 2 shows an apparatus 500 according to one embodiment of the invention, comprising a nonvolatile memory 520, a processor 510 and a read and write memory 560. The memory 520 has a first memory part 530, in which a computer program for controlling the apparatus 500 is stored. The computer program in the memory part 530 for controlling the apparatus 500 can be an operating system.

The apparatus 500 can be enclosed in, for example, a control unit, such as said control unit mentioned above. The data-processing unit 510 can comprise, for example, a microcomputer.

The memory 520 also has a second memory part 540, in which a program for said cruise control system according to the invention is stored. In an alternative embodiment, the program is stored in a separate nonvolatile data storage medium 550, such as, for example, a CD or an exchangeable semiconductor memory. The program can be stored in an executable form or in a compressed state.

When it is stated below that the data-processing unit 510 runs a specific function, it should be clear that the data-processing unit 510 is running a specific part of the program stored in the memory 540 or a specific part of the program stored in the nonvolatile recording medium 550.

The data-processing unit 510 is tailored for communication with the memory 550 through a data bus 514. The data-processing unit 510 is also tailored for communication with the memory 520 through a data bus 512. In addition, the data-processing unit 510 is tailored for communication with the memory 560 through a data bus 511. The data-processing unit 510 is also tailored for communication with a data port 590 by the use of a data bus 515.

The method according to the present invention can be executed by the data processing unit 510, by the data-processing unit 510 running the program stored in the memory 540 or the program stored in the nonvolatile recording medium 550.

The invention should not be deemed to be limited to the embodiments described above, but rather a number of further variants and modifications are conceivable within the scope of the following patent claims.

## Claims

1. Method for controlling a vehicle cruise control comprising the steps of:
- driving said vehicle with said cruise control active and set to maintain a vehicle set target speed (v_{cc set target speed});
- registering a first parameter being vehicle gross weight and a second parameter being current road inclination;
- based on said registered first and second parameters adjusting a set vehicle overspeed (v_{bcc}) for a brake cruise control in said cruise control to a new value (v_{bcc flex}) ; **characterized in that**
- if said first parameter is registered high and/or said second parameter is registered as a steep downhill then adjusting by decreasing said set vehicle overspeed in a corresponding degree or;
- if said first parameter is registered low and/or said second parameter is registered as a downhill with low inclination then adjusting by increasing said set vehicle overspeed in a corresponding degree.

2. Method as in the claim 1 further comprising the steps of:
- registering a third parameter being coming road topography for a predetermined road distance ahead of current vehicle position;
- based on said registered first to third parameters adjusting said set vehicle overspeed.

3. A cruise control system comprising a control unit arranged for maintaining a set vehicle set target speed (v_{cc set target speed}), **characterized in that** said control unit is programmed to:
- register a first parameter, which is vehicle gross weight, and a second parameter, which is current road inclination;
- based on said registered first and second parameters adjust a set vehicle overspeed (v_{bcc}) for a brake cruise control in said cruise control to a new value (v_{bcc flex}) and; **characterized in that**
- if said first parameter is registered high and/or said second parameter is registered as a steep downhill then said control unit is programmed to adjust by decreasing said set vehicle overspeed in a corresponding degree or;
- if said first parameter is registered low and/or said second parameter is registered as a downhill with low inclination then said control unit is programmed to adjust by increasing said set vehicle overspeed in a corresponding degree.

4. A computer program comprising program code means for performing all the steps of any one of the claims 1 to 2 when said program is run on a computer.

5. A computer program product comprising program code means stored on a computer readable medium for performing all steps of anyone of the claims 1 to 2 when said program product is run on a computer.

6. A storage medium, such as a computer memory (520) or a nonvolatile data storage medium (550), for use in a computing environment, the memory comprising a computer readable program code to perform the method of the claims 1 to 2.

## Patentansprüche

1. Verfahren zur Steuerung einer Fahrzeug-Tempomatsteuerung mit den Schritten:
- Fahren des Fahrzeugs mit der Tempomatsteuerung, die aktiv und zur Aufrechterhaltung einer gesetzten Fahrzeugsollgeschwindigkeit (V_{cc set target speed}) gesetzt ist,
- Registrierung eines ersten Parameters, der das Fahrzeugbruttogewicht ist, und eines zweiten Parameters, der die momentane Straßenneigung ist,
- auf der Basis des registrierten ersten und zweiten Parameters Einstellen einer gesetzten Fahrzeughöchstdrehzahl (v_{bcc}) für eine Bremstempomatsteuerung in der Tempomatsteuerung auf einen neuen Wert (v_{bcc flex}),
**dadurch gekennzeichnet, dass**
- wenn der erste Parameter als hoch registriert wird und/oder der zweite Parameter als ein steiles Gefälle registriert wird, dann durch Verringerung der gesetzten Fahrzeughöchstdrehzahl in einem entsprechenden Ausmaß eingestellt wird, oder
- wenn der erste Parameter als gering registriert wird und/oder der zweite Parameter als ein Gefälle mit geringer Neigung registriert wird, dann durch Erhöhung der gesetzten Fahrzeughöchstdrehzahl in einem entsprechenden Ausmaß eingestellt wird.

2. Verfahren nach Anspruch 1, das außerdem die Schritte umfasst:
- Registrierung eines dritten Parameters, der die kommende Straßentopographie für eine vorherbestimmte Straßenstrecke vor der momentanen Fahrzeugposition ist,
- Einstellung der gesetzten Fahrzeughöchstdrehzahl auf der Basis der registrierten ersten bis dritten Parameter.

3. Tempomatsteuersystem mit einer Steuereinheit, die zur Aufrechterhaltung einer gesetzten Fahrzeugsollgeschwindigkeit (v_{cc set target speed}) konfiguriert ist, **dadurch gekennzeichnet, dass** die Steuereinheit programmiert ist, um
- einen ersten Parameter, der das Fahrzeugbruttogewicht ist, und einen zweiten Parameter, der die momentane Straßenneigung ist, zu registrieren,
- auf der Basis des registrierten ersten und zweiten Parameters eine gesetzte Fahrzeughöchstdrehzahl (v_{bcc}) für eine Bremstempomatsteuerung in der Tempomatsteuerung auf einen neuen Wert (v_{bcc flex}) einzustellen, und
**dadurch gekennzeichnet, dass**
- wenn der erste Parameter als hoch registriert wird und/oder der zweite Parameter als ein steiles Gefälle registriert wird, dann die Steuereinheit so programmiert ist, dass sie durch Verringerung der gesetzten Fahrzeughöchstdrehzahl in einem entsprechenden Ausmaß einstellt, oder
- wenn der erste Parameter als gering registriert wird und/oder der zweite Parameter als ein Gefälle mit geringer Neigung registriert wird, dann die Steuereinheit so programmiert ist, dass sie durch Erhöhung der gesetzten Fahrzeughöchstdrehzahl in einem entsprechenden Ausmaß einstellt.

4. Computerprogramm mit einer Programmcodeeinrichtung zur Durchführung aller Schritte nach einem der Ansprüche 1 bis 2, wenn das Programm auf einem Computer ausgeführt wird.

5. Computerprogrammerzeugnis mit einer auf einem computerlesbaren Medium gespeicherten Programmcodeeinrichtung zur Durchführung aller Schritte nach einem der Ansprüche 1 bis 2, wenn das Programmerzeugnis auf einem Computer ausgeführt wird.

6. Speichermedium, wie zum Beispiel ein Computerspeicher (520) oder ein nichtflüchtiges Datenspeichermedium (550) zur Verwendung in einer Computerumgebung, wobei der Speicher einen computerlesbaren Programmcode zur Durchführung des Verfahrens der Ansprüche 1 bis 2 umfasst.

## Revendications

1. Procédé de commande d'un régulateur de vitesse de véhicule, comprenant les étapes de :
- conduire ledit véhicule avec ledit régulateur de vitesse actif et réglé pour maintenir une vitesse cible fixée de véhicule (V_{cc vitesse cible fixée}) ;
- enregistrer un premier paramètre qui est un poids total en charge de véhicule et un deuxième paramètre qui est une inclinaison actuelle de route ;
- régler, sur la base desdits premier et deuxième paramètres, une vitesse de pointe de véhicule fixée (V_{bcc}) pour un régulateur de vitesse de freinage dans ledit régulateur de vitesse à une nouvelle valeur (V_{bcc flex}) ;
**caractérisé en ce que**
- si ledit premier paramètre est enregistré comme élevé et/ou ledit deuxième paramètre est enregistré en tant que pente descendante raide, alors le réglage se fait par la diminution de ladite vitesse de pointe de véhicule fixée à un degré correspondant ou ;
- si ledit premier paramètre est enregistré comme faible et/ou ledit deuxième paramètre est enregistré en tant que pente descendante à faible inclinaison, alors le réglage se fait par l'augmentation de ladite vitesse de pointe de véhicule fixée à un degré correspondant.

2. Procédé selon la revendication 1, comprenant en outre les étapes de :
- enregistrer un troisième paramètre qui est une topographie de route à venir pour une distance prédéterminée de route en avant d'une position actuelle de véhicule ;
- régler ladite vitesse de pointe de véhicule fixée, sur la base desdits premier à troisième paramètres enregistrés.

3. Système de régulation de vitesse comprenant une unité de commande agencée pour maintenir une vitesse cible fixée de véhicule (V_{cc vitesse cible fixée}), **caractérisé en ce que** ladite unité de commande est programmée pour :
- enregistrer un premier paramètre, qui est un poids total en charge de véhicule, et un deuxième paramètre, qui est une inclinaison actuelle de route ;
- régler, sur la base desdits premier et deuxième paramètres enregistrés, une vitesse de pointe de véhicule fixée (v_{bcc}) pour un régulateur de vitesse de freinage dans ledit régulateur de vitesse à une nouvelle valeur (V_{bcc flex}) et ;
**caractérisé en ce que**
- si ledit premier paramètre est enregistré comme élevé et/ou ledit deuxième paramètre est enregistré en tant que pente descendante raide, alors ladite unité de commande est programmée pour effectuer le réglage en diminuant ladite vitesse de pointe de véhicule fixée à un degré correspondant ou ;
- si ledit premier paramètre est enregistré comme faible et/ou ledit deuxième paramètre est enregistré en tant que pente descendante à faible inclinaison, alors ladite unité de commande est programmée pour effectuer le réglage en augmentant ladite vitesse de pointe de véhicule fixée à un degré correspondant.

4. Programme informatique comprenant un moyen de code de programme pour mettre en oeuvre toutes les étapes de l'une quelconque des revendications 1 à 2 lorsque ledit programme est exécuté sur un ordinateur.

5. Produit de programme informatique comprenant un moyen de code de programme stocké sur un support lisible par ordinateur pour mettre en oeuvre toutes les étapes de l'une quelconque des revendications 1 à 2, lorsque ledit produit de programme est exécuté sur un ordinateur.

6. Support de stockage, tel qu'une mémoire d'ordinateur (520) ou un support de stockage de donnée non volatile (550), pour une utilisation dans un environnement informatique, la mémoire comprenant un code de programme lisible par ordinateur pour mettre en oeuvre le procédé des revendications 1 à 2.
